# FASCICULE DE BREVET EUROPEEN

(11) **EP 3 090 894 B1**
(45) Date de publication et mention de la délivrance du brevet: **24.01.2018**
(21) Numéro de dépôt: 16163621.2
(22) Date de dépôt: 04.04.2016
(51) Int. Cl.: B60J 7/16, B60P 3/34

(54) **TOIT RELEVABLE POUR VÉHICULE AUTOMOBILE, NOTAMMENT POUR CAMPING-CAR**
AUFKLAPPBARES DACH FÜR KRAFTFAHRZEUG, INSBESONDERE FÜR WOHNMOBIL
RISING ROOF FOR A MOTOR VEHICLE, IN PARTICULAR FOR A RECREATIONAL VEHICLE

(30) Priorité: 06.05.2015 FR 1554079
(43) Date de publication de la demande: 09.11.2016
(73) Titulaire: Stylevan, 89000 Auxerre (FR)
(72) Inventeur: NOLLET, Alexis, 89660 CHAMOUX (FR); DOUMENC, André, 76240 BONSECOURS (FR)
(74) Mandataire: Nony

(56) Documents cités:
- EP-A1- 2 186 667
- FR-A3- 2 453 043
- GB-A- 2 519 681
- US-A1- 2002 135 204

## Description

La présente invention concerne un toit relevable pour véhicule automobile, notamment pour camping-car tel que divulgué par EP 2186667 A1. L'invention s'intéresse plus particulièrement mais non exclusivement aux toits relevables avec inclinaison ou non destinés à être montés sur des véhicules automobiles existants afin de les transformer en camping-car.

Certains toits relevables permettent de transformer un véhicule automobile dit intermédiaire dans la classification des véhicules, de type fourgon à usage de déplacement courant en un véhicule automobile habitable, usuellement connu sous l'appellation camping-car.

Ainsi, un fourgon aménagé avec un toit relevable conserve quasiment toute la carrosserie d'un fourgon sans toit relevable et se distingue uniquement par l'espace supplémentaire avec ouverture au-dessus de la carrosserie que le toit en position relevée dégage.

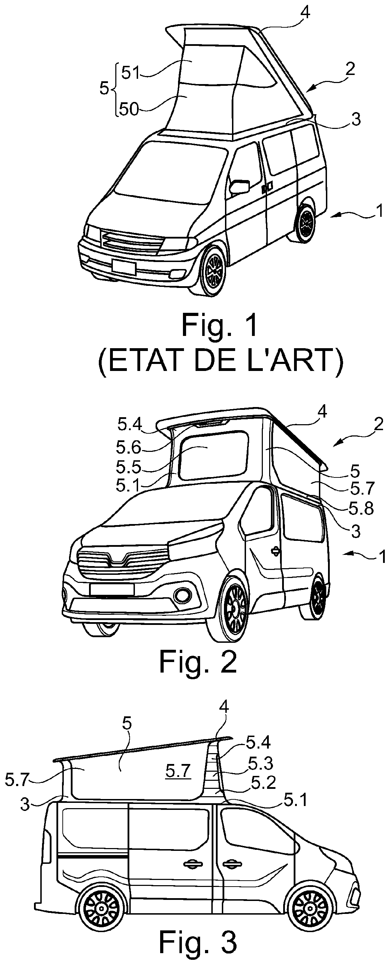

On a représenté en figure 1, un fourgon 1 qui a été aménagé avec un toit relevable 2 selon l'état de l'art. Le toit relevable 2 comporte un cadre 3 sur lequel est articulé directement un élément de carrosserie 4 formant le dessus du toit, et une paroi latérale 5 fermant l'espace entre le cadre 3 et le dessus 4 du toit. L'articulation du dessus 4 du toit sur le cadre 3 lui permet de passer d'une position rabattue dans laquelle il obture le cadre 3 et une position relevée dans laquelle il est relevé par rapport au cadre, cette position pouvant être en outre une position inclinée par rapport au cadre comme montré en figure 1. Le cadre 3 est usuellement réalisé par jointure de profilés. La paroi latérale 5 est usuellement constituée d'une toile 50, en général en coton qui peut être rendue imperméable par un produit d'enduction, sur laquelle est éventuellement une ou plusieurs fenêtres 51 en plastique transparent ou constituée d'une grille formant une moustiquaire.

Les toits relevables connus, tels que celui représenté en figure 1, présente plusieurs inconvénients. Tout d'abord, le temps d'assemblage de tous les composants peut être long et les différentes opérations peuvent être délicates. En particulier, la fixation de la toile sur le cadre et/ou le dessus du toit peut être compliquée car les coins droits de ces composants peuvent rendre délicate et relativement longue l'opération.

En outre, les opérations complètes de rabattement peuvent être longues et non aisées. En effet, il faut veiller à ce que la toile en coton se replie correctement sur elle-même vers l'intérieur de l'habitacle du véhicule et il peut être nécessaire de faire une opération manuelle d'enroulement de la toile sur elle-même, lorsqu'elle est repliée, suivie d'une opération de fixation de la toile enroulée, notamment par des sangles, et ce afin de la ranger au mieux à l'intérieur de l'habitacle.

Il existe donc un besoin d'améliorer les toits relevables pour véhicules automobiles, notamment en vue d'en faciliter l'assemblage, de réduire le temps d'assemblage, le coût associé et de faciliter et réduire le temps des opérations complètes de rabattement, en particulier manuelle, sur les carrosseries des véhicules automobiles.

L'invention a ainsi pour objet, selon un premier de ses aspects, un toit relevable pour véhicule automobile, en particulier pour camping-car, comportant:
- un cadre destiné à être fixé sur le dessus de carrosserie d'un véhicule automobile, le cadre étant profilé avec des bords et coins arrondis définissant des concavités;
- un élément rigide de carrosserie formant la partie de dessus du toit, articulé directement ou indirectement sur le cadre, entre une position rabattue dans laquelle il obture le cadre et une position relevée dans laquelle il est relevé par rapport au cadre ;
- une paroi latérale fermant l'espace entre cadre et la partie de dessus du toit, la paroi latérale étant constituée d'éléments de toile conformés et assemblés entre eux en créant un ensemble de forme concave de sorte qu'ils viennent se replier les uns sur les autres à l'intérieur des concavités en épousant leur forme, lorsque l'élément rigide de carrosserie est rabattu de sa position relevée vers sa position rabattue.

L'invention fournit une solution de rabattement du dessus d'un toit relevable sur son cadre avec un repliement de la paroi latérale à l'intérieur de ce dernier sans qu'il y ait une nécessité d'intervention humaine lors ou après le repliement.

Grâce à l'invention, l'assemblage du toit en lui-même et les opérations complètes de rabattement du toit sont facilités et les temps afférents sont réduits comparativement aux toits relevables selon l'état de l'art.

L'(les) opérateur(s) qui réalise(nt) le montage de la paroi latérale lors de l'assemblage du toit peu(ven)t le faire aisément car du fait des bords et coins arrondis du cadre, il(s) peu(ven)t faire glisser aisément les éléments de toile à l'intérieur du rail de guidage qui épouse la forme du cadre.

Les éléments de toile sont assemblés entre eux en créant un ensemble de forme concave, qui leur permet lorsqu'on les se replient les unes sur les autres de venir se loger à l'intérieur des concavités définies dans le cadre, et ce de manière concomitante au rabattement du dessus du toit sur le cadre. Contrairement aux toits relevables selon l'état de l'art, il n'y a donc plus, avec un toit selon l'invention, à veiller à ce que le repliement de la paroi latérale se fait bien et une fois le repliement fait, à enrouler la toile sur elle-même et le cas échéant à fixer la toile enroulée à l'habitacle.

Avantageusement, les éléments de toile sont cousus entre eux. On assure ainsi un assemblage des éléments de toile fiable qui ne nuit pas à l'esthétique globale de la paroi latérale.

Selon une variante de réalisation, les éléments de toile du dessous sont glissés à l'intérieur d'un rail de guidage intégré dans le cadre et fixés par des moyens de blocage vissés dans le cadre.

Selon une autre variante de réalisation, les éléments de toile du dessous comportent un ou plusieurs joncs glissé(s) à l'intérieur d'un rail de guidage intégré dans le cadre.

Avantageusement, au moins une partie des éléments de toile étant des pièces de toile en matière imperméable.

Selon un mode de réalisation avantageux, au moins une partie des éléments de toile sont des pièces de toile isolante aluminisée. Certaines pièces de toile isolante aluminisée peuvent comporter une couche d'enduction en thermoplastique, tel qu'en polychlorure de vinyle (PVC).

On peut prévoir qu'une partie des éléments de toile présente des caractéristiques de souplesse et/ou de couleur et/ou d'aspect et/ou de transparence différentes de celles l'autre partie des éléments de toile.

Le toit relevable selon l'invention peut constituer un kit pour aménager un véhicule automobile, de type fourgon. Ainsi, on peut transformer un fourgon existant en un camping-car.

L'invention concerne également un véhicule automobile, en particulier camping-car, équipé d'un toit relevable tel que décrit précédemment.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique, en perspective, un exemple de camping-car réalisé à partir d'un fourgon aménagé avec un toit relevable selon l'état de l'art,
- la figure 2 est une vue en perspective, d'un exemple de camping-car réalisé à partir d'un fourgon aménagé avec un toit relevable selon l'invention,
- la figure 3 est une vue de côté du camping-car selon la figure 2,
- la figure 4 est une vue de dessus d'un cadre de toit relevable selon l'invention, destiné à être fixé sur le dessus de carrosserie d'un véhicule automobile,
- la figure 4A est une coupe axiale du cadre selon A-A de la figure 4,
- la figure 5 est une vue en perspective et en demi-coupe du cadre selon la figure 4,
- la figure 6 est une représentation en perspective de devant de la paroi latérale d'un toit relevable selon l'invention, en position dépliée correspondant à la position relevée du toit,
- la figure 7 est une représentation en perspective de derrière de la paroi latérale d'un toit relevable selon l'invention, en position dépliée correspondant à la position relevée du toit,
- la figure 8 représente, le patron de différents éléments de toile constituant la paroi latérale du toit relevable selon l'invention.

La figure 1 a déjà été commentée en détail en préambule, elle ne le sera donc pas ci-après.

Les mêmes éléments d'un toit relevable selon l'état de l'art et d'un toit relevable selon l'invention sont désignés par les mêmes références.

On a représenté en figures 2 et 3 un fourgon 1 qui a été aménagé avec un toit relevable 2 selon l'invention. Le toit relevable 2 comporte un cadre 3 sur lequel est articulé indirectement un élément de carrosserie 4 formant le dessus du toit, et une paroi latérale 5 fermant l'espace entre le cadre 3 et le dessus 4 du toit. L'articulation du dessus 4 du toit sur le cadre 3 lui permet de passer d'une position rabattue dans laquelle il obture le cadre 3 et une position relevée dans laquelle il est relevé par rapport au cadre, cette position pouvant être en outre une position inclinée par rapport au cadre comme montré en figures 2 et 3. L'habitacle du fourgon 1 est agrandi par l'espace intérieur du toit dans sa position relevée à travers l'ouverture 30 du cadre 3.

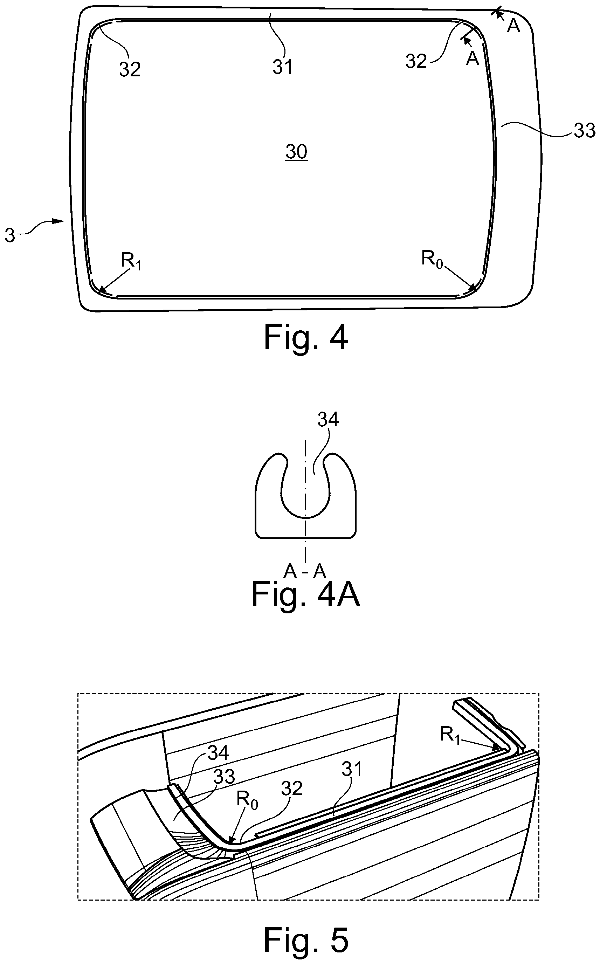

Le cadre 3 est profilé avec des bords 31 et coins 32 arrondis et définissant des concavités 33, comme montré en figures 4 et 5. Les rayons de courbure R0 des coins 32 à l'avant du cadre 3, c'est-à-dire ceux destinés à être à l'avant du véhicule, peuvent être différents de ceux R1 des coins 32 à l'arrière du cadre 3. En particulier, comme dans la configuration représentée aux figures 4 et 5, les rayons R0 peuvent être supérieurs aux rayons R1

Le cadre 3 intègre en outre un rail de guidage 34 représenté en figure 4A.

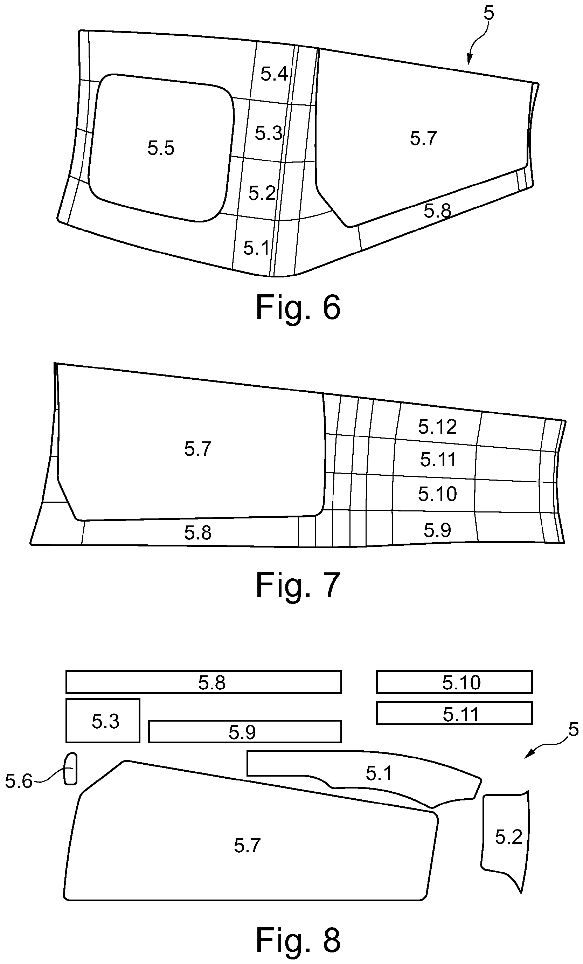

La paroi latérale 5 est constituée d'éléments de toile, 5.1 à 5.12, conformés et assemblés entre eux, en particulier cousus entre eux, comme montrés dans la position dépliée en figures 6 et 7.

Selon l'invention, la forme donnée aux éléments de toiles 5.1 à 5.12 et l'assemblage entre eux permet que ceux-ci viennent se replier les uns sur les autres à l'intérieur des concavités en épousant leur forme, lorsque l'élément rigide de carrosserie est rabattu de sa position relevée vers sa position rabattue.

Ainsi, la forme des éléments de toile 5.1 à 5.12, assemblés entre eux, avantageusement par couture permet d'obtenir un ensemble concave pour la toile tout en ayant des bords arrondis. Cette forme d'ensemble concave donné à la toile, qui peut d'ailleurs être différente d'un repliement à un autre, permet un pliage optimal lorsqu'on replie les éléments de toile les uns sur les autres, et ainsi venir épouser la forme des concavités du cadre.

Confrontés aux problèmes d'une part de temps et de facilité du montage de la paroi latérale dans un toit relevable, et d'autre part de temps et de facilité de son repliement lors du rabattement du toit relevable, les inventeurs ont pensé judicieusement à définir à la fois un profil de cadre arrondi et concave et une conformation et un assemblage d'éléments de toile qui permet un repliement de ces derniers avec logement dans les concavités sans intervention humaine.

Pour définir les arrondis et concavités du cadre 3 et les formes d'éléments de toile 5.1 à 5.12 adaptées et vérifier le repliement recherché, les inventeurs ont réalisé au préalable une simulation en trois-dimensions à l'aide d'un logiciel de conception assistée par ordinateur (CAO). Ils ont ainsi pu définir le profil de cadre montré en figures 4 et 5 et les éléments de toile montrés en figure 6 à 8.

Contrairement aux parois latérales selon l'état de l'art constituées essentiellement d'une toile en coton, l'invention permet de mettre en oeuvre certains éléments de toile dont la forme leur confère une certaine rigidité. Cela permet alors de réaliser ces éléments en une matière présentant de meilleures performances d'isolation thermique et d'imperméabilité que le coton. Il peut ainsi s'agir d'une toile aluminisée.

Dans le mode de réalisation illustré, les éléments de toile définissant les bords de l'avant et les bords latéraux 5.1 à 5.4 et 5.8 et de l'arrière 5.9 à 5.12 sont en toile aluminisée commercialisée sous la dénomination « Petrol 634 ».

Les éléments de toile définissant les parties centrales de l'avant 5.5, et latérales 5.7 sont en toile aluminisée avec une couche d'enduction en PVC.

L'invention n'est pas limitée aux exemples qui viennent d'être décrits. Tout profil de cadre 3 avec des bords 31 et coins arrondis et qui définit des concavités 33 et toute paroi latérale avec des éléments de toiles 5.1 conformés et assemblés entre eux pour venir se loger dans les concavités 33 par repliement les uns sur les autres à 5.12 conviennent à la réalisation de l'invention.

L'expression « comportant un » doit être comprise comme étant synonyme de « comportant au moins un », sauf si le contraire est spécifié.

## Revendications

1. Toit relevable (1) pour véhicule automobile (2), en particulier pour camping-car, comportant:
- un cadre (3) destiné à être fixé sur le dessus de carrosserie d'un véhicule automobile, le cadre étant profilé avec des bords (31) et coins (32) arrondis et définissant des concavités (33);
- un élément rigide de carrosserie (4) formant la partie de dessus du toit, articulé directement ou indirectement sur le cadre, entre une position rabattue dans laquelle il obture le cadre et une position relevée dans laquelle il est relevé par rapport au cadre ;
- une paroi latérale (5) fermant l'espace entre cadre et la partie de dessus du toit **caractérise en ce que** la paroi latérale est constituée d'éléments de toile (5.1 à 5.12) conformés et assemblés entre eux en créant un ensemble de forme concave de sorte qu'ils viennent se replier les uns sur les autres à l'intérieur des concavités en épousant leur forme, lorsque l'élément rigide de carrosserie est rabattu de sa position relevée vers sa position rabattue.

2. Toit relevable (2) selon la revendication 1, les éléments de toile étant cousus entre eux.

3. Toit relevable (2) selon la revendication 1 ou 2, les éléments de toile du dessous étant glissés à l'intérieur d'un rail de guidage (34) intégré dans le cadre et fixés par des moyens de blocage vissés dans le cadre.

4. Toit relevable (2) selon la revendication 1 ou 2, les éléments de toile du dessous comportant un ou plusieurs joncs glissé(s) à l'intérieur d'un rail de guidage (34) intégré dans le cadre.

5. Toit relevable (2) selon l'une des revendications précédentes, au moins une partie des éléments de toile étant des pièces de toile en matière imperméable.

6. Toit relevable (2) selon l'une des revendications précédentes, au moins une partie des éléments de toile étant des pièces de toile isolante aluminisée (5.1 à 5.5, 5.7 à 5.12).

7. Toit relevable (2) selon la revendication 6, certaines pièces (5.5, 5.7) de toile isolante aluminisée comportant une couche d'enduction en thermoplastique, tel qu'en polychlorure de vinyle (PVC).

8. Toit relevable (2) selon l'une des revendications précédentes, une partie des éléments de toile présente des caractéristiques de souplesse et/ou de couleur et/ou d'aspect et/ou de transparence différentes de celles l'autre partie des éléments de toile.

9. Toit relevable (2) selon l'une des revendications précédentes, constituant un kit pour aménager un véhicule automobile, de type fourgon.

10. Véhicule automobile (1), en particulier camping-car, équipé d'un toit relevable (2) selon l'une des revendications précédentes.

## Patentansprüche

1. Aufklappbares Dach (1) für ein Kraftfahrzeug (2), insbesondere für ein Wohnmobil, umfassend:
- einen Rahmen (3), der dazu bestimmt ist, an der Karosserieoberseite eines Kraftfahrzeugs befestigt zu werden, wobei der Rahmen mit Kanten (31) und gerundeten Ecken (32) profiliert ist, die Ausnehmungen (33) definieren;
- ein starres Karosserieelement (4) welches das Oberteil des Daches bildet, das direkt oder indirekt zwischen einer eingeklappten Stellung, in der es den Rahmen verschließt, und einer aufgeklappten Stellung, in der es in Bezug auf den Rahmen aufgeklappt ist, an den Rahmen angelenkt ist;
- eine Seitenwand (5), die den Raum zwischen Rahmen und dem Oberteil des Daches schließt, **dadurch gekennzeichnet, dass** die Seitenwand aus Tuchelementen (5.1 bis 5.12) besteht, die so ausgebildet und zusammengefügt sind, dass sie eine konkave Anordnung bilden, so dass sie sich innerhalb der Ausnehmungen aufeinander falten und an deren Form anlegen, wenn das starre Karosserieelement aus seiner aufgeklappten Stellung in seine eingeklappte Stellung eingeklappt wird.

2. Aufklappbares Dach (2) nach Anspruch 1, wobei die Tuchelemente zusammengenäht sind.

3. Aufklappbares Dach (2) nach Anspruch 1 oder 2, wobei die Tuchelemente der Unterseite in eine Führungsschiene (34) eingeschoben sind, die in den Rahmen integriert ist, und mit Arretierungsmitteln befestigt sind, die in den Rahmen geschraubt sind.

4. Aufklappbares Dach (2) nach Anspruch 1 oder 2, wobei die Tuchelemente der Unterseite einen oder mehrere Sicherungsringe umfassen, die in eine in den Rahmen integrierte Führungsschiene (34) eingeschoben sind.

5. Aufklappbares Dach (2) nach einem der vorhergehenden Ansprüche, wobei mindestens ein Teil der Tuchelemente Tuchstücke aus wasserundurchlässigem Material sind.

6. Aufklappbares Dach (2) nach einem der vorhergehenden Ansprüche, wobei mindestens ein Teil der Tuchelemente Stücke aus aluminisiertem isolierendem Tuch (5.1 bis 5.5, 5.7 bis 5.12) sind.

7. Aufklappbares Dach (2) nach Anspruch 6, wobei einige Stücke (5.5, 5.7) aus aluminisiertem isolierendem Tuch eine Beschichtungsschicht aus Kunststoff wie aus Polyvinylchlorid (PVC) umfassen.

8. Aufklappbares Dach (2) nach einem der vorhergehenden Ansprüche, ein Teil der Tuchelemente andere Weichheits- und/oder Farb- und/oder Optik- und/oder Transparenzmerkmale als der andere Teil der Tuchelemente aufweist.

9. Aufklappbares Dach (2) nach einem der vorhergehenden Ansprüche, das einen Bausatz zur Ausstattung eines Kraftfahrzeugs vom Typ Kastenwagen bildet.

10. Kraftfahrzeug (1), insbesondere Wohnmobil, mit einem aufklappbaren Dach (2) nach einem der vorhergehenden Ansprüche.

## Claims

1. Raisable roof (1) for a motor vehicle (2), in particular for a camper, comprising:
- a frame (3) intended to be fixed to the top of the body of a motor vehicle, the frame being profiled with edges (31) and rounded corners (32) and defining concavities (33);
- a rigid body element (4) forming the top part of the roof and articulated directly or indirectly on the frame between a lowered position in which it blocks off the frame and a raised position in which it is raised with respect to the frame;
- a lateral wall (5) closing the space between the frame and the top part of the roof,
**characterized in that** the lateral wall is made up of cloth elements (5.1 to 5.12) which are configured and assembled with one another to create an assembly of concave shape such that they are folded onto one another inside the concavities while hugging the shape thereof when the rigid body element is lowered from its raised position to its lowered position.

2. Raisable roof (2) according to Claim 1, the cloth elements being stitched together.

3. Raisable roof (2) according to Claim 1 or 2, the bottom cloth elements being slid inside a guide rail (34) incorporated into the frame and being fixed by blocking means screwed into the frame.

4. Raisable roof (2) according to Claim 1 or 2, the bottom cloth elements comprising one or more retaining rings slid inside a guide rail (34) incorporated into the frame.

5. Raisable roof (2) according to one of the preceding claims, at least one portion of the cloth elements being pieces of cloth of impermeable material.

6. Raisable roof (2) according to one of the preceding claims, at least one portion of the cloth elements being pieces of aluminized insulating cloth (5.1 to 5.5, 5.7 to 5.12).

7. Raisable roof (2) according to Claim 6, certain pieces (5.5, 5.7) of aluminized insulating cloth comprising a coating layer of thermoplastic, such as polyvinyl chloride (PVC).

8. Raisable roof (2) according to one of the preceding claims, one portion of the cloth elements has flexibility and/or colour and/or appearance and/or transparency characteristics which are different from those of the other portion of the cloth elements.

9. Raisable roof (2) according to one of the preceding claims, constituting a kit for fitting out a motor vehicle of the van type.

10. Motor vehicle (1), in particular a camper, equipped with a raisable roof (2) according to one of the preceding claims.
